# EUROPEAN PATENT APPLICATION

(11) **EP 2 525 607 A1**
(43) Date of publication of application: **21.11.2012**
(21) Application number: 11732911.0
(22) Date of filing: 13.01.2011
(51) Int. Cl.: H04W 48/08

(54) **BASE STATION APPARATUS AND SYSTEM INFORMATION NOTIFYING METHOD**

(30) Priority: 14.01.2010 JP 2010006141
(71) Applicant: NTT DoCoMo, Inc., Tokyo 100-6150 (JP)
(72) Inventor: MIKI, Nobuhiko, Tokyo 100-6150 (JP)
(74) Representative: HOFFMANN EITLE
(86) International application number: PCT/JP2011/050407
(87) International publication number: WO 2011/087041

(57) **Abstract**

The present invention provides a base station apparatus and system information notification method that, in the event a plurality of communication systems coexist, support each mobile communication system. A base station apparatus (20) that notifies system information to a mobile terminal apparatus (10), sets change information of system information in a system band formed with a plurality of component carriers, and notifies the change information to the mobile terminal apparatuses (10) corresponding to respective component carriers, using a plurality of component carriers. The mobile terminal apparatus (10) is configured to recognize change of system information in the system band via at least one component carrier, by means of this notification of the change information, and receive system information.

## Description

### TECHNICAL FIELD

The present invention relates to a base station apparatus and system information notification method in a next-generation mobile communication system.

### BACKGROUND ART

In a UMTS (Universal Mobile Telecommunications System) network, for the purposes of improving frequency usage efficiency and improving data rates, system features based on W-CDMA (Wideband Code Division Multiple Access) are maximized by adopting HSDPA (High Speed Downlink Packet Access) and HSUPA (High Speed Uplink Packet Access). For this UMTS network, for the purposes of further increasing high-speed data rates, providing low delay and so on, Long Term Evolution (LTE) has been under study (Non-Patent Literature 1). In LTE, as a multiplexing scheme, OFDMA (Orthogonal Frequency Division Multiple Access), which is different from W-CDMA, is used on the downlink, and SC-FDMA (Single Carrier Frequency Division Multiple Access) is used on the uplink.

In a third-generation system, it is possible to achieve a transmission rate of maximum approximately 2 Mbps on the downlink by using a fixed band of approximately 5 MHz. Meanwhile, in the LTE system, it is possible to achieve a transmission rate of about maximum 300 Mbps on the downlink and about 75 Mbps on the uplink by using a variable band which ranges from 1.4 MHz to 20 MHz. Furthermore, in the UMTS network, for the purpose of achieving further broadbandization and higher speed, successor systems to LTE have been under study (for example, LTE Advanced (LTE-A)). Accordingly, in the future, it is expected that these multiple mobile communication systems will coexist, and configurations (radio base station apparatus, mobile terminal apparatus, etc.) that are capable of supporting these multiple systems will become necessary.

### CITATION LIST

### NON-PATENT LITERATURE

Non-Patent Literature 1: 3GPP, TR25.912 (V7.1.0), "Feasibility study for Evolved UTRA and UTRAN," Sept. 2006

### SUMMARY OF THE INVENTION

### TECHNICAL PROBLEM

The present invention has been made taking into account the above points, and it is therefore an object of the present invention to provide a base station apparatus and system information notification method that, in the event a plurality of mobile communication systems coexist, can support each mobile communication system.

### SOLUTION TO PROBLEM

A base station apparatus according to the present invention has: a change information generation section configured to generate change information of system information in a system band formed with a plurality of component carriers; and a notification section configured to notify the change information, using the plurality of component carriers, to a mobile terminal apparatus corresponding to each component carrier, and the change information allows the mobile terminal apparatus to recognize change of system information in the system band via at least one component carrier, and allows the mobile terminal apparatus to receive the system information.

### TECHNICAL ADVANTAGES OF THE INVENTION

According to the present invention, change of system information in a system band is notified using a plurality of component carriers, to mobile terminal apparatuses corresponding to respective component carriers, so that, even when a plurality of mobile communication systems coexist, it is possible to allow a mobile terminal apparatus of each mobile communication system to recognize the change of system information. Also, it is possible to allow a mobile terminal apparatus that receives system information via a plurality of component carriers, to recognize change of system information via part of the component carriers.

### BRIEF DESCRIPTION OF THE DRAWINGS

FIG. 1 is a diagram for explaining a system band in an LTE system;
FIG. 2 is diagram for explaining a configuration of a mobile communication system;
FIG. 3 is a diagram for explaining an overall configuration of a base station apparatus;
FIG. 4 is a diagram for explaining an overall configuration of a mobile terminal apparatus;
FIG. 5 is a functional block diagram of a baseband signal processing section provided in a base station apparatus;
FIG. 6 is a functional block diagram of a baseband signal processing section provided in a mobile terminal apparatus;
FIG. 7 is a diagram showing an example of a configuration of assignment of broadcast information to radio resources;
FIG. 8 is a diagram for explaining system information change timing;
FIG. 9 is a diagram for explaining a system information change notification method;
FIG. 10 is a diagram for explaining a receiving method by a mobile terminal apparatus; and
FIG. 11 is a diagram for explaining in detail a second receiving method by a mobile terminal apparatus.

### DESCRIPTION OF EMBODIMENTS

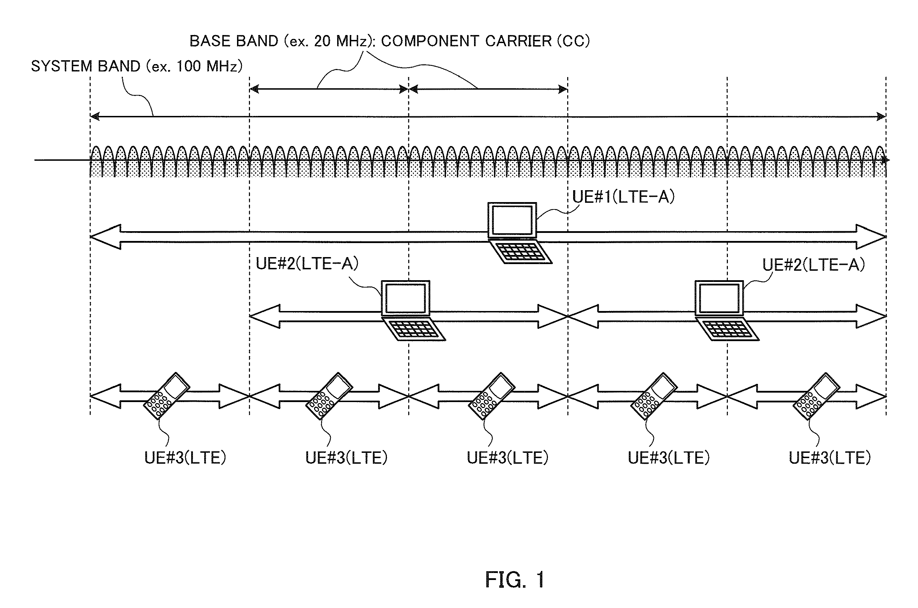

FIG. 1 is a diagram for explaining the state of use of frequency when mobile communication is performed on the downlink. The example illustrated in FIG. 1 is the state of use of frequency in the event where an LTE-A system, which is the first mobile communication system having a relatively wide first system band formed with a plurality of component carriers, and an LTE system, which is a second mobile communication system having a relatively narrow (here, formed with one component carrier) second system band, coexist. In the LTE-A system, for example, radio communication is performed using a variable system bandwidth of 100 MHz or below, and, in the LTE system, radio communication is performed using a variable system bandwidth of 20 MHz or below. The system band for the LTE-A system is at least one fundamental frequency block (component carrier: CC), where the system band of the LTE system is one unit. Coupling a plurality of fundamental frequency blocks into a wide band as one unit in this way is referred to as "carrier aggregation."

For example, in FIG. 1, the system band of the LTE-A system is a system band to include bands of five component carriers (20 MHz×5=100 MHz), where the system band (base band: 20 MHz) of the LTE system is one component carrier. In FIG. 1, a mobile terminal apparatus UE (User Equipment) #1 is a mobile terminal apparatus to support the LTE-A system (and also support the LTE system) and has a system band of 100 MHz. UE #2 is a mobile terminal apparatus to support the LTE-A system (and also support the LTE system) and has a system band of 40 MHz (20 MHz×2=40 MHz). UE #3 is a mobile terminal apparatus to support the LTE system (and not support the LTE-A system) and has a system band of 20 MHz (base band).

Now, broadcast information used in the LTE system is classified into MIBs (Master Information Blocks) and SIBs (System Information Blocks). In this case, MIBs include information (about downlink bandwidth, downlink control channel configuration and so on) that is necessary to receive the downlink. SIBs are classified into SIB to SIBx, where SIB 1 includes scheduling information for the subsequent SIBs, and SIB 2 and onward include system information such as broadcast information in cell units. Also, change of system information is recognized by a mobile terminal apparatus by means of, for example, the tag information (System Info Value Tag) and PCH (Paging Channel) flag included in SIB 1.

In the LTE system, a mobile terminal apparatus monitors the above change of system information in a single component carrier, and, upon the change of system information, the mobile terminal apparatus receives system information again (that is, updates the system information). In the event this system information notification method for the LTE system is simply applied to the LTE-A system, it then becomes necessary to monitor change of system information in all component carriers, which is likely to be burdensome process for a mobile terminal apparatus.

The present inventors have arrived at the present invention in order to solve this problem. That is to say, an essence of the present invention is, when system information in a mobile communication system having a system band formed with a plurality of component carriers changes, to allow a mobile terminal apparatus to recognize the change of system information via part of the component carriers.

Now, embodiments of the present invention will be described below in detail with reference to the accompanying drawings. Here, a base station apparatus and a mobile terminal apparatus in a mobile communication system which is constructed so that an LTE system and an LTE-A system overlap, will be described.

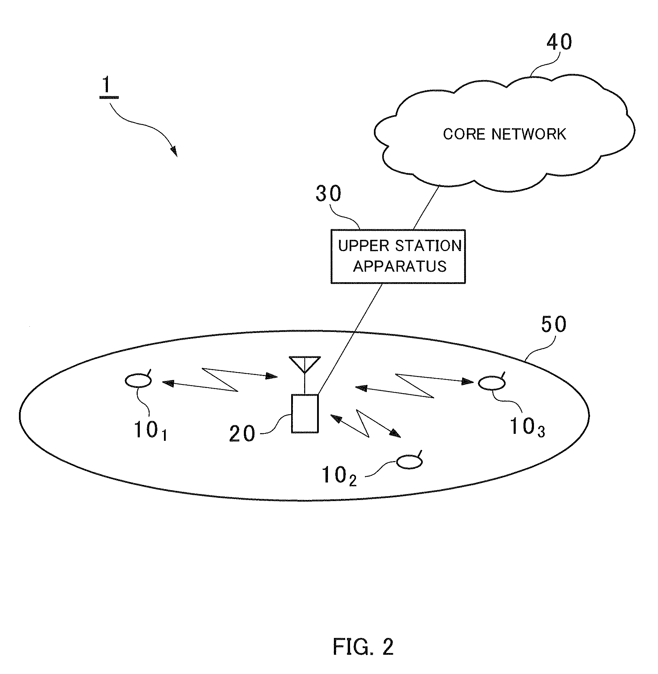

Referring to FIG. 2, a mobile communication system 1 having a mobile terminal apparatus (UE) 10 and a base station apparatus (Node B) 20 according to an embodiment of the present invention will be described. FIG. 2 is a diagram for explaining the configurations of the mobile communication system 1 having the mobile terminal apparatus 10 and base station apparatus 20 according to the present embodiment. Note that, as described above, the mobile communication systems 1 illustrated in FIG. 2 is a system to accommodate the LTE system and LTE-A system. LTE-A may be referred to as IMT-Advanced or may be referred to as 4G.

As illustrated in FIG. 12, the mobile communication system 1 is configured to include a base station apparatus 20 and a plurality of mobile terminal apparatuses 10 (10₁, 10₂, 10₃, ··· 10ₙ, where n is an integer to satisfy n>0) that communicate with this base station apparatus 20. The base station apparatus 20 is connected with an upper station apparatus 30, and this upper station apparatus 30 is connected with a core network 40. The mobile terminal apparatuses 10 communicate with the base station apparatus 20 in a cell 50. Note that the upper station apparatus 30 includes, for example, an access gateway apparatus, a radio network controller (RNC), a mobility management entity (MME) and so on, but is by no means limited to these.

Although the mobile terminal apparatuses (10₁, 10₂, 10₃, ··· 10ₙ) include an LTE terminal and an LTE-A terminal, the following description will be given with respect to "mobile terminal apparatus 10," unless specified otherwise. Also, although a mobile terminal apparatus 10 performs radio communication with the base station apparatus 20 for ease of explanation, more generally, user apparatuses (UE: User Equipment) including mobile terminal apparatuses and fixed terminal apparatuses may be used.

In the mobile communication system 1, as radio access schemes, OFDMA (Orthogonal Frequency Division Multiple Access) is applied to the downlink, and SC-FDMA (Single-Carrier Frequency-Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, a system band into bands formed with one or continuous resource blocks, and allowing a plurality of terminals to use mutually different bands.

Here, the communication channels in the LTE system will be described. As for the downlink, a PDSCH (Physical Downlink Shared Channel) that is shared between mobile terminal apparatuses 10, and a downlink L1/L2 control channel (PDCCH (Physical Downlink Control Channel), a PCFICH (Physical Control Format Indicator Channel) and a PHICH (Physical Hybrid-ARQ Indicator Channel)) are used. By means of this PDSCH, user data, that is, normal data signals, is transmitted. Transmission data is included in this user data. Note that component carrier information and scheduling information that are assigned to the mobile terminal apparatus 10 by the base station apparatus 20 are notified to the mobile terminal apparatus 10 by the L1/L2 control channel.

On the uplink, a PUSCH (Physical Uplink Shared Channel), which is used by each mobile terminal apparatus 10 on a shared basis, and a PUCCH (Physical Uplink Control Channel), which is an uplink control channel, are used. User data is transmitted by means of this PUSCH.
Furthermore, the PUCCH adopts inter-subframe frequency hopping, and transmits downlink radio quality information (CQI: Channel Quality Indicator), ACK/NACK, and so on.

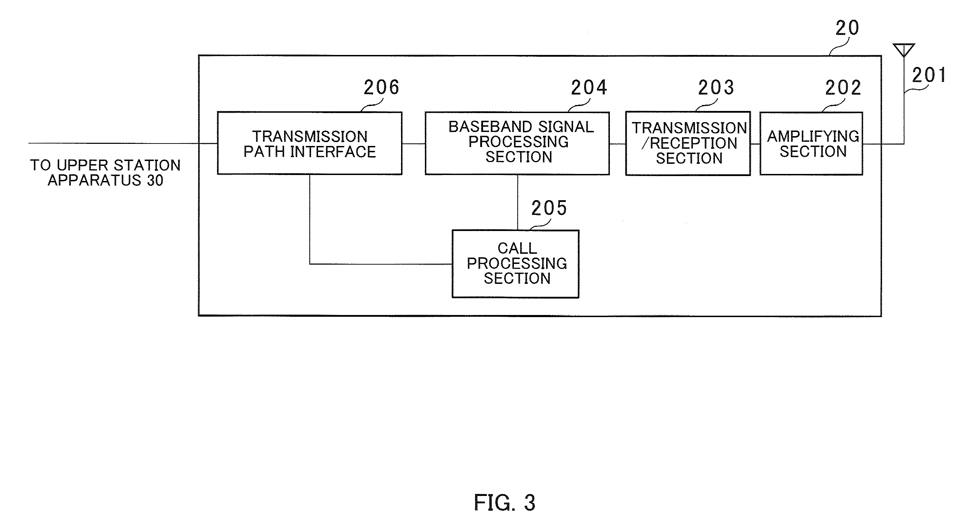

Referring to FIG. 3, an overall configuration of the base station apparatus 20 according to the present embodiment will be described. The base station apparatus 20 has a transmission/reception antenna 201, an amplifying section 202, a transmission/reception section 203, a baseband signal processing section 204, a call processing section 205 and a transmission path interface 206.

User data that is transmitted on the downlink from the base station apparatus 20 to the mobile terminal apparatus 10 is input in the baseband signal processing section 204, through the transmission path interface 206, from the upper station apparatus 30, which is positioned above the base station apparatus 20.

In the baseband signal processing section 204, PDCP layer processing, RLC (Radio Link Control) layer transmission processing such as division and coupling of user data and RLC retransmission control transmission processing, MAC (Medium Access Control) retransmission control, including, for example, HARQ (Hybrid Automatic Repeat reQuest) transmission processing, scheduling, transport format selection, channel coding, inverse fast Fourier transform (IFFT) processing, and precoding processing, are performed. Furthermore, signals of the physical downlink control channel, which is a downlink control channel, are subjected to transmission processing such as channel coding and inverse fast Fourier transform, and are transferred to the transmission/reception section 203.

Also, the baseband signal processing section 204 notifies control information for allowing the mobile terminal apparatus 10 to communicate with the base station apparatus 20, to the mobile terminal apparatuses 10 connected to the same cell 50, by a broadcast channel. Broadcast information for communication in the cell 50 includes, for example, identification information of a root sequence (root sequence index) for generating MIBs and SIBs described above and signals of random access preambles in the PRACH.

In the transmission/reception section 203, the baseband signal output from the baseband signal processing section 204 is subjected to frequency conversion processing into a radio frequency band, and, after that, amplified in the amplifying section 202 and transmitted from the transmission/reception antenna 201.

Meanwhile, as for signals to be transmitted on the uplink from the mobile terminal apparatus 10 to the base station apparatus 20, a radio frequency signal that is received in the transmission/reception antenna 201 is amplified in the amplifying section 202, subjected to frequency conversion and converted into a baseband signal in the transmission/reception section 203, and is input to the baseband signal processing section 204.

The baseband signal processing section 204 performs FFT processing, IDFT processing, error correction decoding, MAC retransmission control reception processing, and RLC layer and PDCP layer reception processing of the user data included in the baseband signal that is received as input, and transfers the result to the upper station apparatus 30 through the transmission path interface 206.

The call processing section 205 performs call processing such as setting up and releasing a communication channel, manages the state of the base station apparatus 20 and manages the radio resources.

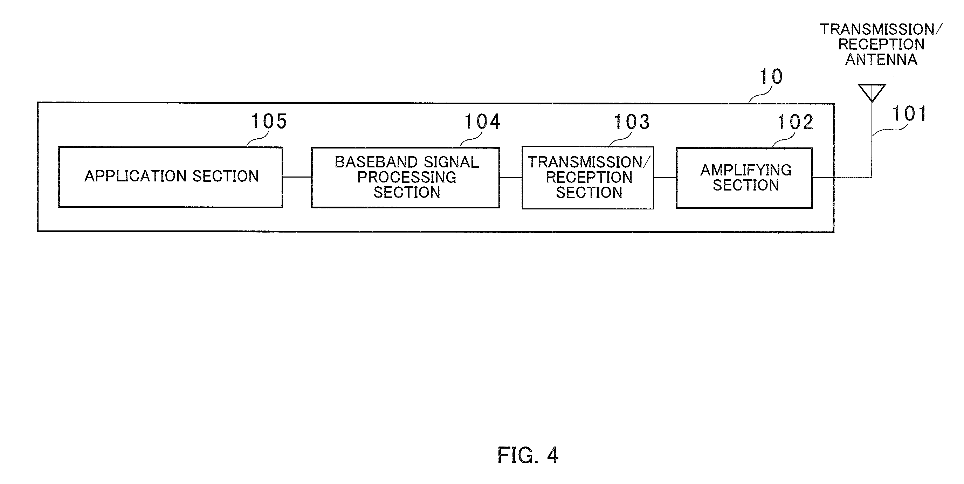

Next, referring to FIG. 4, an overall configuration of the mobile terminal apparatus 10 according to the present embodiment will be described. An LTE terminal and an LTE-A terminal have the same principle part configurations and therefore will be described indiscriminately. The mobile terminal apparatus 10 has a transmission/reception antenna 101, an amplifying section 102, a transmission/reception section 103, a baseband signal processing section 104 and an application section 105.

As for downlink data, a radio frequency signal received in the transmission/reception antenna 101 is amplified in the amplifying section 102, and subjected to frequency conversion and converted into a baseband signal in the transmission/reception section 103. This baseband signal is subjected to reception processing such as FFT processing, error correction decoding and retransmission control and so on in the baseband signal processing section 104. In this downlink data, downlink user data is transferred to the application section 105. The application section 105 performs processing related to upper layers above the physical layer and the MAC layer. Also, in the downlink data, broadcast information is also transferred to the application section 105.

On the other hand, uplink user data is input from the application section 105 to the baseband signal processing section 104. In the baseband signal processing section 104, retransmission control (HARQ (Hybrid ARQ)) transmission processing, channel coding, DFT processing, IFFT processing and so on are performed, and the result is transferred to the transmission/reception section 103. The baseband signal output from the baseband signal processing section 104 is subjected to frequency conversion processing in the transmission/reception section 103 and converted into a radio frequency band, and, after that, amplified in the amplifying section 102 and transmitted from the transmission/reception antenna 101.

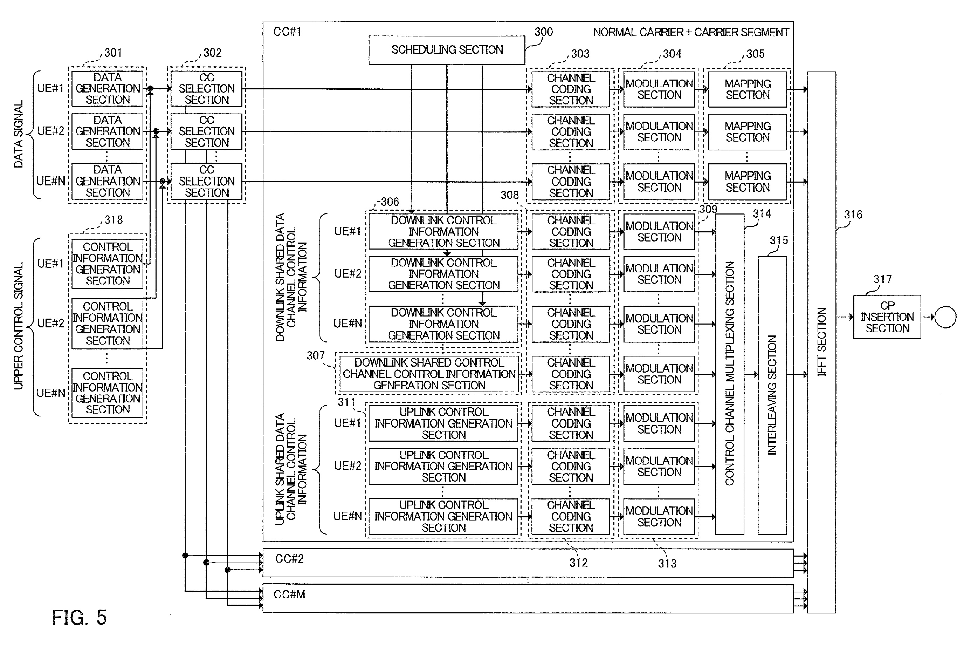

FIG. 5 is a functional block diagram of a baseband signal processing section 204 provided in the base station apparatus 20 according to the present embodiment, and primarily illustrates the function blocks of the transmission processing section in the baseband signal processing section 204. Note that a downlink configuration will be described with reference to FIG. 5 where transmission data for the mobile terminal apparatus 10 under the base station apparatus 20 is transferred from the upper station apparatus 30 to the base station apparatus 20. Also, in FIG. 5, a base station configuration to support the mobile communication system 1 where the number of component carriers is M (CC #1 to CC #M) is illustrated as an example.

The data generation section 301 outputs transmission data transferred from the upper station apparatus 30 as user data separately. The control information generation section 318 outputs control signals such as SIBs as upper control signals of upper layers, on a per user basis. As described above, SIB 1 includes scheduling information for subsequent SIBs and tag information which shows whether or not there is change of system information. The tag information is incremented by the control information generation section 318 when system information is changed. Also, subsequent SIBs (SIBs 2 to 9) include system information such as broadcast information in cell units and so on. The component carrier selection section 302 selects, on a per user basis, component carriers to use for radio communication with the mobile terminal apparatus 10.

The scheduling section 300 controls resource allocation with respect to component carrier CC #1 and performs scheduling separately between the LTE terminal user and the LTE-A terminal user. Also, the scheduling section 300 takes into account the carrier segments in resource allocation for the uplink/downlink shared control channels. Also, the scheduling section 300 receives as input the transmission data and retransmission command from the upper station apparatus 30, and also receives as input the channel estimation values and resource block CQIs from the reception section having measured an uplink signal. The scheduling section 300 schedules uplink/downlink control signals and uplink/downlink shared channel signals with reference to the retransmission command input from the upper station apparatus 30, the channel estimation values and CQIs. A channel in mobile communication varies differently per frequency, due to frequency selective fading. So, upon transmission of user data to a user terminal, adaptive frequency scheduling to assign resource blocks of good communication quality to each user terminal on a per subframe basis, is used. In adaptive frequency scheduling, for each resource block, a user terminal of good channel quality is selected and assigned. Consequently, the scheduling section 300 assigns resource blocks using the CQI of each resource block, fed back from each user terminal. Also, the MCS (Coding rate and Modulation Scheme) that fulfills a required block error rate with the assigned resource blocks is determined.

The baseband signal processing section 204 of the base station apparatus 20 has a channel coding section 303 that performs, on a per user basis, channel coding of user data output from the data generation section 301 and the shared data channel (PDSCH) that transmits SIBs output from the control information generation section 318, a modulation section 304 that modulates transmission data having been subjected to channel coding, on a per user basis, and a mapping section 305 that maps the modulated transmission data to radio resources.

Also, the baseband signal processing section 204 has a downlink control information generation section 306 that generates downlink shared data channel control information, which is user-specific downlink control information, and a downlink shared control channel control information generation section 307 that generates downlink shared control channel control information, which is downlink control information that is common between users. The downlink shared control channel control information generation section 307 generates, as downlink shared control channel control information, a broadcast channel (PBCH: Physical Broadcast Channel) that transmits MIBs, and RB position information (PDCCH) that notifies the resource block positions where SIBs are assigned. The RB position information is placed in the common search space of the PDCCH. The baseband signal processing section 204 has a channel coding section 308 that performs, on a per user basis, channel coding of the control information that is generated in the downlink control information generation section 306 and downlink shared control channel control information generation section 307, and a modulation section 309 that modulates downlink control information having been subjected to channel coding.

Also, the baseband signal processing section 204 has an uplink control information generation section 311 that generates, on a per user basis, uplink shared data channel control information, which is control information for controlling the uplink shared data channel (PUSCH), a channel coding section 312 that performs, on a per user basis, channel coding of uplink shared data channel control information that is generated, and a modulation section 313 that modulates uplink shared data channel control information having been subjected to channel coding, on a per user basis. The uplink control information generation section 311 generates uplink shared data channel control information separately between the LTE terminal user and the LTE-A terminal user.

Control information modulated in the above modulation sections 309 and 313 on a per user basis is multiplexed in a control channel multiplexing section 314 and furthermore interleaved in an interleaving section 315. The control signal output from the interleaving section 315 and transmission data output from the mapping section 305 are input in an IFFT section 316 as the downlink channel signal. The IFFT section 316 converts the downlink channel signal from a frequency domain signal into a time sequence signal by performing an inverse fast Fourier transform. The cyclic prefix insertion section 317 inserts cyclic prefixes in the time sequence signal of the downlink channel signal. Note that a cyclic prefix functions as a guard interval for cancelling the differences in multipath propagation delay. The transmission data to which cyclic prefixes are added, is transmitted to the transmission/reception section 203.

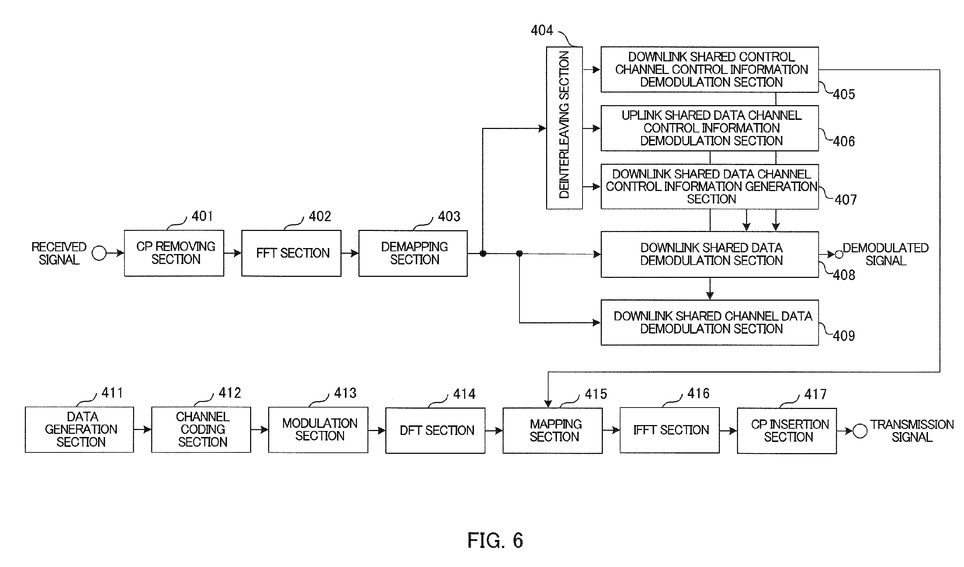

FIG. 6 is a functional block diagram of the baseband signal processing section 104 provided in the mobile terminal apparatus 10 according to the present embodiment, and primarily illustrates the function blocks of the transmission processing section in the baseband signal processing section 104. First, the downlink configuration of the mobile terminal apparatus 10 will be described.

A downlink channel signal that is received as received data from the base station apparatus 20 has the cyclic prefixes removed in a cyclic prefix removing section 401. The downlink channel signal from which the cyclic prefixes have been removed, is input in an FFT section 402. The FFT section 402 converts the downlink channel signal from a time sequence signal into a frequency domain signal through a fast Fourier transform (FFT), and inputs the frequency domain signal in a demapping section 403. The demapping section 403 demaps the downlink channel signal and extracts, from the downlink channel signal, multiplex control information in which a plurality of pieces of control information are multiplexed, user data, and upper control signals. The multiplex control information output from the demapping section 403 is deinterleaved in a deinterleaving section 404.

Also, the baseband signal processing section 104 has a downlink shared control channel control information demodulation section 405 that demodulates downlink shared control channel control information from multiplex control information, an uplink shared data channel control information demodulation section 406 that demodulates uplink shared data channel control information from multiplex control information, a downlink shared data channel control information demodulation section 407 that demodulates downlink shared data channel control information from multiplex control information, a downlink shared data demodulation section 408 that demodulates user data and upper control signals, and a downlink shared channel data demodulation section 409 that demodulates downlink shared channel data.

The downlink shared control channel control information demodulation section 405 extracts downlink shared control channel control information, which is downlink control information that is common between users, by performing, for example, blind decoding processing, demodulation processing, channel decoding processing and so on of the common search space of multiplex control information (PDCCH). The downlink shared control channel control information includes MIBs for receiving the PDSCH that transmits user data and upper control information, and the positions of resource blocks where SIBs are assigned, and is input in the downlink shared data demodulation section 408. The uplink shared data channel control information demodulation section 406 extracts uplink shared data channel control information, which is user-specific uplink control information, by performing, for example, blind decoding processing, demodulation processing, channel decoding processing and so on of the user-specific search spaces of multiplex control information (PDCCH). The uplink shared data channel control information is used to control the uplink shared data channel (PUSCH) and is input in the downlink shared channel data demodulation section 409.

The downlink shared data channel control information demodulation section 407 extracts downlink shared data channel control information, which is user-specific downlink control signals, by performing, for example, blind decoding processing, demodulation processing, channel decoding processing and so on of the user-specific search spaces of multiplex control information (PDCCH). The downlink shared data channel control information is used to control the downlink shared data channel (PDSCH) and is input in the downlink shared data demodulation section 408. The downlink shared data demodulation section 408 acquires the SIBs transmitted as upper control information, based on the MIBs and RB position information of SIBs input from the downlink shared control channel control information demodulation section 405. Also, the downlink shared data demodulation section 408 acquires user data based on the downlink shared data channel control information that is input from the downlink shared data channel control information demodulation section 407.

The downlink shared channel data demodulation section 409 demodulates downlink shared channel data based on uplink shared data channel control information that is input from the uplink shared data channel control information demodulation section 406. The demodulated data signal and upper control signal are input in the application section 105. In this way, the mobile terminal apparatus 10 becomes capable of receiving the downlink shared data channel (PDSCH) by receiving MIBs from the base station apparatus 20, and, furthermore, becomes capable of receiving upper control signals such as SIBs transmitted from the downlink shared data channel (PDSCH) by receiving RB position information of SIBs. Then, the mobile terminal apparatus 10 recognizes change of system information by monitoring the tag information in SIB 1, which shows whether or not there is change of system information, or the paging channel flag of the PDSCH. Note that the method of notifying system information will be described later in detail.

Next, the uplink configuration of the mobile terminal apparatus 10 will be described. A data generation section 411 generates uplink user data. A channel coding section 412 performs channel coding of user data output from the data generation section 411. A modulation section 413 modulates the transmission data having been subjected to channel coding. A DFT section 414 converts the modulated transmission data from a time sequence signal into a frequency domain signal by performing a discrete Fourier transform (DFT), and inputs this frequency domain signal in a mapping section 415. The mapping section 415 maps the transmission data to radio resources based on assignment information that is notified on the downlink. An IFFT section 416 performs an inverse fast Fourier transform of the transmission data and converts the frequency domain signal into a time sequence signal. A cyclic prefix insertion section 417 inserts cyclic prefixes in the time sequence signal of transmission data. The transmission signal to which cyclic prefixes have been added is transmitted to the transmission/reception section 103.

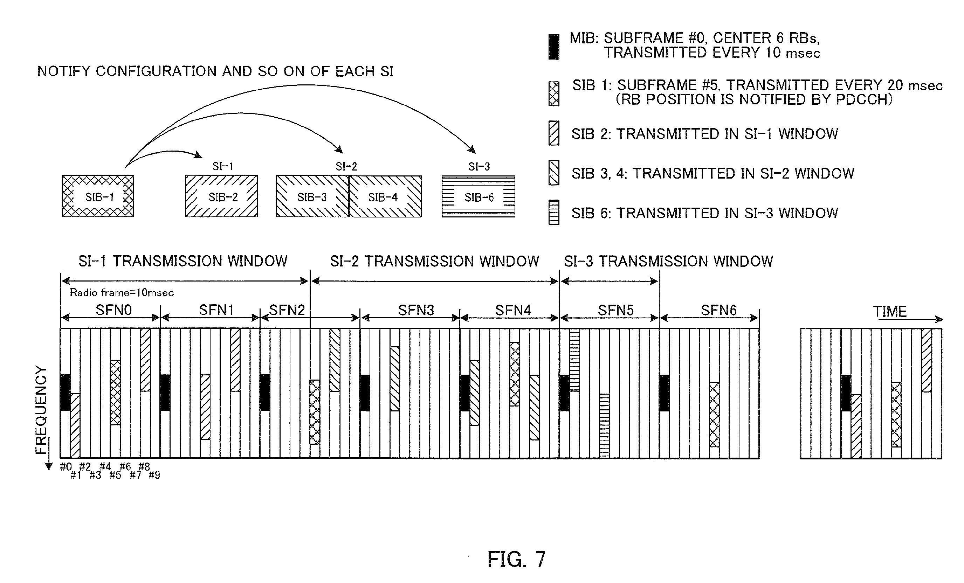

Referring to FIG. 7, allocation of MIBs and SIBs to radio resources will be described. FIG. 7 is a diagram showing an example of a configuration of assignment of broadcast information to radio resources. Note that, in FIG. 7, the configuration of assignment of broadcast information to radio resources in one component carrier is shown for ease of explanation. As illustrated in FIG. 7, in the center band of 1.4 MHz (the center 6 RBs), an MIB is transmitted in subframe #0 in each radio frame, in a 10 msec cycle. Also, the MIB includes information for receiving SIB 1 that is transmitted by the downlink shared data channel (PDSCH). The position to assign the MIB is fixed in time resources and frequency resources. In this way, MIBs are transmitted from the base station apparatus 20 by fixed resources, and therefore are received without giving special notification to the mobile terminal apparatus 10.

SIB 1 is transmitted in subframe #5 in the radio frames having even-numbered radio frame numbers (SFNs), in a 20 msec cycle. SIB 1 includes scheduling information for receiving the subsequent SIBs and tag information showing whether or not there is change of system information. The position to assign SIB 1 is fixed in time resources and variable in frequency resources. The frequency resource for SIB 1 is notified to the mobile terminal apparatus 10 by RB position information that is placed in the common search space of the PDCCH. In this way, SIB 1 is received as MIBs and RB position information are notified to the mobile terminal apparatus 10.

SIB 2 and the subsequent SIBs are mapped to radio resource based on the scheduling information in SIB 1. That is to say, the positions to assign the subsequent SIBs are variable in time resources and frequency resources, and notified to the mobile terminal apparatus 10 by the scheduling information of SIB 1. In this way, the subsequent SIBs are received as SIB 1 is notified to the mobile terminal apparatus 10.

For example, SIB 2 is transmitted in subframes #1 and #8 of the zeroth radio frame number and in subframes #4 and #7 of the first radio frame number. SIBs 3 and 4 are transmitted in subframe #7 of the second radio frame number, in subframe #3 of the third radio frame number, and in subframes #1 and #7 of the fourth radio frame number. SIB 6 is transmitted in subframes #1 and #4 of the fifth radio frame number. Also, SIB 2 includes the first system information (SI-1), SIBs 3 and 4 include second system information (SI-2) and SIB 6 includes third system information (SI-3).

Also, the base station apparatus 20 sets, on a per system information basis, transmission windows in which SIBs 2 to x are transmitted repeatedly. For example, the first transmission window for the first system information, in which SIB 2 is transmitted repeatedly, is set 25 msec, a second transmission window for the second system information, in which SIBs 3 and 4 are transmitted repeatedly, is set 25 msec, and a third transmission window for the third system information, in which SIB 6 is transmitted repeatedly, is set 10 msec.

Then, the mobile terminal apparatus 10 receives SIBs in a determined period in the transmission windows, and, by this means, the mobile terminal apparatus 10 is able to recognize the system information included in received SIBs. For example, the mobile terminal apparatus 10 identifies the SIB that is received repeatedly in the first transmission window to be SIB 2, and, by combining the SIBs 2 that are received, acquires the first system information. Also, the mobile terminal apparatus 10 identifies the SIBs that are received repeatedly in the second transmission window to be SIBs 3 and 4, and, by combining the SIBs 3 and 4 that are received, acquires the second system information. Furthermore, the mobile terminal apparatus 10 identifies the SIB that is received repeatedly in the third transmission window to be SIB 6, and, by combining the SIBs 6 that are received, acquires the third system information.

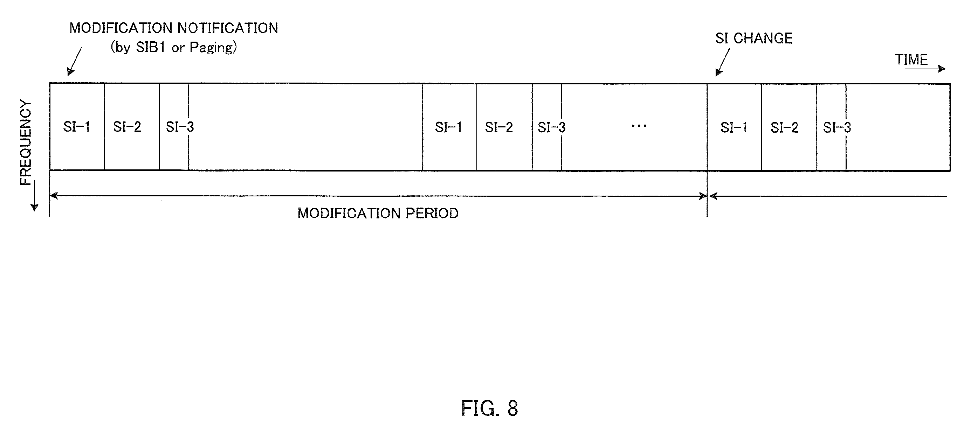

Now, referring to FIG. 8, change of system information will be described. FIG. 8 is a diagram for explaining system information change timing. Note that, in FIG. 8, a modification period in one component carrier is shown for ease of explanation.

As illustrated in FIG. 8, a modification period, in which the same system information is transmitted repeatedly, is set in the base station apparatus 20, and, in this modification period, transmission windows are set repeatedly (four times, for example), on a per system information basis. In the event system information is changed in the base station apparatus 20, the change of system information is notified to the mobile terminal apparatus 10. In this case, whether or not there is change of system information is determined by the mobile terminal apparatus 10 based on the increment of the tag information (System Info Value Tag) of SIB 1 or the paging channel (one bit flag to represent system information). Then, when the mobile terminal apparatus 10 determines that there is change of system information, the mobile terminal apparatus 10 receives system information in the modification period.

In this way, the mobile terminal apparatus 10 first acquires MIBs that are allocated in fixed positions in radio resources, in time resources and frequency resources. The mobile terminal apparatus 10 becomes capable of receiving SIB 1 by reading MIBs. Upon receiving SIB 1, the mobile terminal apparatus 10 acquires scheduling information for the subsequent SIBs and tag information that shows whether or not there is change of system information, from SIB 1. If the tag information is the same as the tag information previous acquired, the mobile terminal apparatus 10 judges that there is no change of system information, and does not receive system information (SIB 2 and onward). On the other hand, if the tag information is incremented from the tag information previously acquired, the mobile terminal apparatus 10 judges that there is change of system information, and receives system information again in the modification period based on the scheduling information acquired from SIB 1. Note that a configuration is shown here where or not there is change of system information is determined based on the tag information of SIB 1, but it is equally possible to provide a configuration to determine the same based on the paging channel flag.

Also, in the base station apparatus 20, the above settings related to MIBs are set primarily in the downlink shared control channel control information generation section 307, and the settings related to SIBs are set primarily in the control information generation section 318. Furthermore, the settings related to transmission windows may be set in either the downlink shared control channel control information generation section 307, the control information generation section 318, and the downlink control information generation section 306.

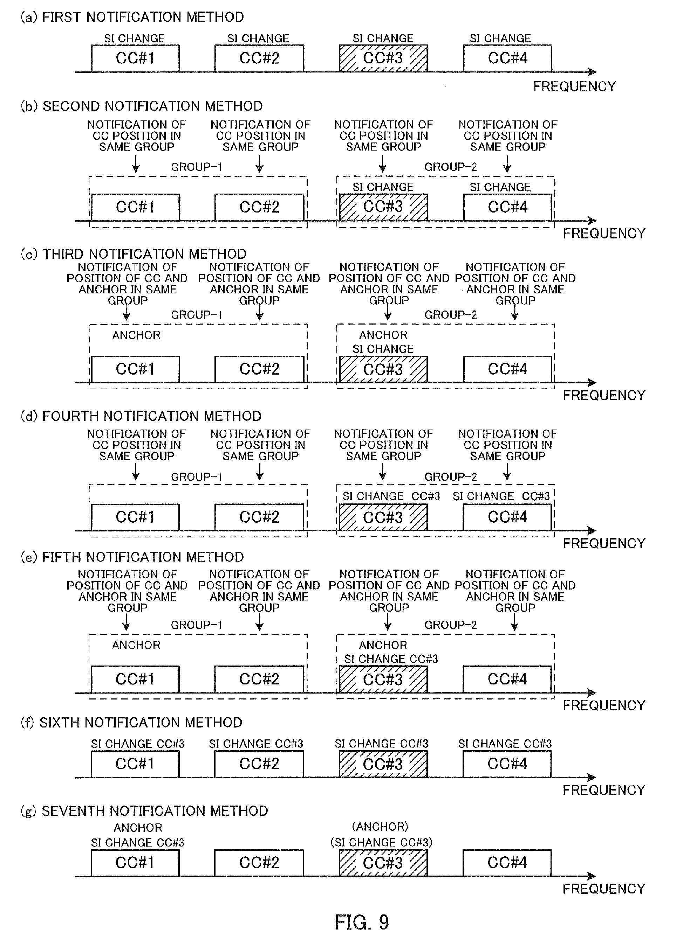

Next, referring to FIG. 9, the method of notifying change of system information, which is a characteristic part of the present invention, will be described. FIG. 9 is a diagram showing an example of the first through seventh notification methods. Each notification method in FIG. 9 is a method of allowing, in a mobile communication system having a system band formed with four component carrier CCs #1 to CC #4, a mobile terminal apparatus 10 recognize change of system information via part of the component carriers and receive system information again. Also, an example will be described with reference to FIG. 9 where the system information of component carrier CC #3 is changed.

FIG. 9(a) shows the first notification method. The first notification method is a method of notifying changes of system information all together, and allows the mobile terminal apparatus 10 to recognize change in part of system information (component carrier CC #3) as change in all component carriers.

In this case, the mobile terminal apparatus 10 receives system information again in all of component carrier CCs #1 to #4. By means of this configuration, it becomes possible to notify change of system information of component carriers inside the system band by the same signaling as in the LTE system. Also, notification of system information is not limited to a specific component carrier, and it is therefore possible to support various mobile communication systems of different system bands.

FIG. 9(b) shows the second notification method. The second notification method is a method of notifying change of system information in group units, and allows the mobile terminal apparatus 10 to recognize change in part of system information (component carrier CC #3) in a group as change in all component carriers in the group. In this case, the base station apparatus 20 divides a plurality of component carriers into groups, and notifies, in advance, the frequency positions of the component carriers belonging to the same group, to the mobile terminal apparatus, as group information, using, for example, the broadcast channel.

The mobile terminal apparatus 10 receives system information again in all component carrier CCs #3 and #4 in the groups. By means of this configuration, it is possible to notify change of system information of component carriers in a group by the only change of adding signaling of group information. Also, the second notification method has only to receive system information again in component carriers in a group, so that it is possible to reduce processes compared to the first notification method.

FIG. 9(c) shows the third notification method. The third notification method specifies a component carrier for notifying change of system information in a group, in the second notification method. In this case, the base station apparatus 20 notifies, in advance, the mobile terminal apparatus 10 of the component carrier for notifying change, as anchor information (notification carrier specifying information). The mobile terminal apparatus 10 recognizes change of system information by receiving the common search space of the PDCCH, notified in the component carrier for notification of change, which is specified by the anchor information (for example, component carrier CC #3).

Then, upon recognizing change of system information in a group, the mobile terminal apparatus 10 receives system information again in all component carrier CCs #3 and #4 in the group. By means of this configuration, it is possible to notify change of system information of component carriers in a group by the only change of adding signaling of group information and anchor information. Also, the third notification method specifies the component carriers to notify system information in a group, so that it is possible to reduce the processes at the mobile terminal apparatus 10.

FIG. 9(d) shows the fourth notification method. The fourth notification method is a method of notifying a specific component carrier (for example, component carrier CC #3) where system information is changed, in a group, and allows the mobile terminal apparatus 10 to accurately recognize change of system information in the group. This signaling for notifying a specific component carrier is defined for the mobile terminal apparatus 10 to support the LTE-A system, and, to the mobile terminal apparatus 10 supporting the LTE system, change of system information is notified by, for example, the tag information of SIB 1 and paging information, as described above. Note that signaling for notifying a specific component carrier may be any configuration as long as it is information to associate a specific component carrier and change of system information.

Here, the method of notification for the mobile terminal apparatus 10 supporting the LTE system is the same as the second notification method and therefore omitted, and the method of notification for the mobile terminal apparatus 10 supporting the LTE-A system will be described. The base station apparatus 20 notifies the mobile terminal apparatus 10 of change of system information of a specific component carrier, in addition to group information. By receiving the common search space of the PDCCH that is notified by either component carrier CC #3 or #4, based on group information, the mobile terminal apparatus 10 recognizes change of the system information of component carrier #3.

Then, upon recognizing the change of the system information of component carrier CC #3, the mobile terminal apparatus 10 receives system information again in component carrier CC #3. By means of this configuration, it is possible to accurately notify the mobile terminal apparatus 10 of component carriers where system information has been changed. Also, according to the fourth notification method, system information is received again in a specific component carrier, so that it is possible to reduce the processes at the mobile terminal apparatus 10.

FIG. 9(e) shows the fifth notification method. The fifth notification method specifies a component carrier for notifying change of system information, in a group, in the fourth notification method. In this case, the base station apparatus 20 notifies the mobile terminal apparatus 10 of the component carrier for notification of change, in advance, as anchor information (notification carrier specifying information). The mobile terminal apparatus 10 recognizes change of system information of component carrier CC#3 by receiving the common search space of the PDCCH, notified in the component carrier for notification of change, which is specified by the anchor information (for example, component carrier CC #3).

Then, upon recognizing the change of the system information of component carrier CC #3, the mobile terminal apparatus 10 receives system information again in component carrier CC #3. By means of this configuration, it is possible to notify change of system information of a specific component carrier by the only change of adding signaling of group information and anchor information. Also, the fifth notification method specifies the component carriers to notify system information in a group, so that it is possible to reduce the processes at the mobile terminal apparatus 10.

FIG. 9(f) shows the sixth notification method. The sixth notification method is a method of notifying a specific component carrier (for example, component carrier CC #3), among all component carriers, where system information is changed, and allows the mobile terminal apparatus 10 to accurately recognize change of system information in the system band. This signaling to notify a specific component carrier is the same as the fourth notification method. The base station apparatus 20 notifies the mobile terminal apparatus 10 of change of system information of a specific component carrier. By receiving the common search space of the PDCCH notified in one of component carrier CCs #1 to #4, the mobile terminal apparatus 10 recognizes change of the system information of component carrier #3.

Then, upon recognizing the change of the system information of component carrier CC #3, the mobile terminal apparatus 10 receives system information again in component carrier CC #3. By means of this configuration, it is possible to accurately notify the mobile terminal apparatus 10 of a component carrier where system information has been changed. Also, the sixth notification method receives system information again in a specific component carrier, so that it is possible to reduce the processes at the mobile terminal apparatus 10.

FIG. 9(g) shows the seventh notification method. The seventh notification method specifies a component carrier for notifying change of system information in the system band, in the sixth notification method. In this case, the base station apparatus 20 notifies, in advance, the mobile terminal apparatus 10 of the component carrier for notifying change, as anchor information (notification carrier specifying information). The mobile terminal apparatus 10 recognizes change of system information of component carrier CC#3 by receiving the common search space of the PDCCH, notified in the component carrier for notification of change, which is specified by the anchor information (for example, component carrier CC #1).

Then, upon recognizing the change of the system information of component carrier CC #3, the mobile terminal apparatus 10 receives system information again in component carrier CC #3. By means of this configuration, it is possible to notify change of system information of a specific component carrier by the only change of adding signaling of anchor information. Also, the seventh notification method specifies the component carrier to notify system information in a group, so that it is possible to reduce the processes at the mobile terminal apparatus 10. Also, it is equally possible to provide a plurality of component carriers (for example, component carriers CC #1 and CC #3) for notification of change in the seventh notification method.

Note that the signaling for notifying group information, anchor information and specific component carrier in the above second notification method to the seventh notification method may be notified by, for example, SIBs and other broadcast information defined newly for the LTE-A system, or by control information.

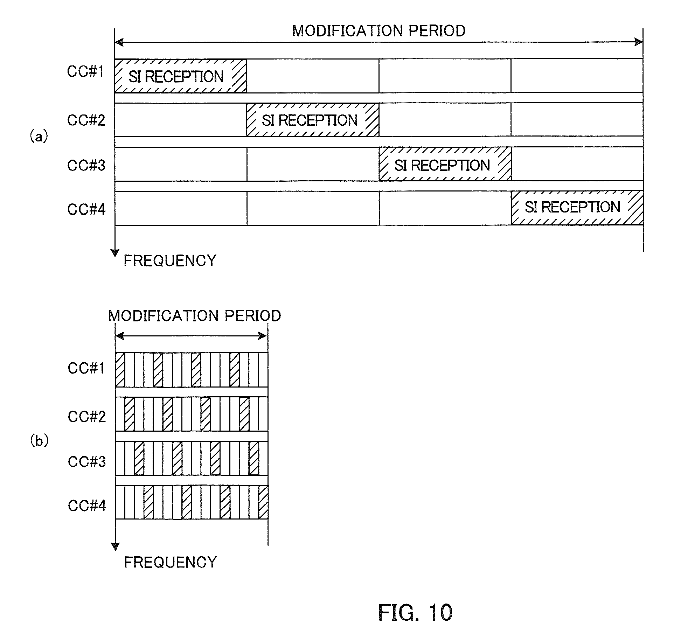

Also, according to the above-described methods of notification, cases might occur where changes of a plurality of component carriers are notified at the same time. When this takes place, it is necessary to receive again system information of a plurality of component carriers in the modification period in which the same system information is transmitted repeatedly. Here, the receiving method at the mobile terminal apparatus 10 in the event where system information is changed in a plurality of component carriers at the same time will be described. FIG. 10 is a diagram for explaining a receiving method at the mobile terminal apparatus 10 in the event system information is changed in a plurality of component carriers at the same time. Note that, in the following description, a receiving method in the mobile terminal apparatus 10 supporting LTE-A system in which a plurality of component carriers constitute the system band will be described.

Like the first receiving method shown in FIG. 10(a), by making the modification period long, it is possible to receive again system information of all component carrier CCs #1 to #4 in the modification period. However, with this configuration, it is necessary to set the modification period long for the LTE-A system. On the other hand, like the second receiving method shown in FIG. 10(b), it is equally possible to repeat setting transmission windows by shifting component carrier CCs #1 to #4, in order, in one-subframe units. Although it is necessary to define the transmission window for LTE-A newly in this case, it becomes possible to make the modification period short compared to the first receiving method.

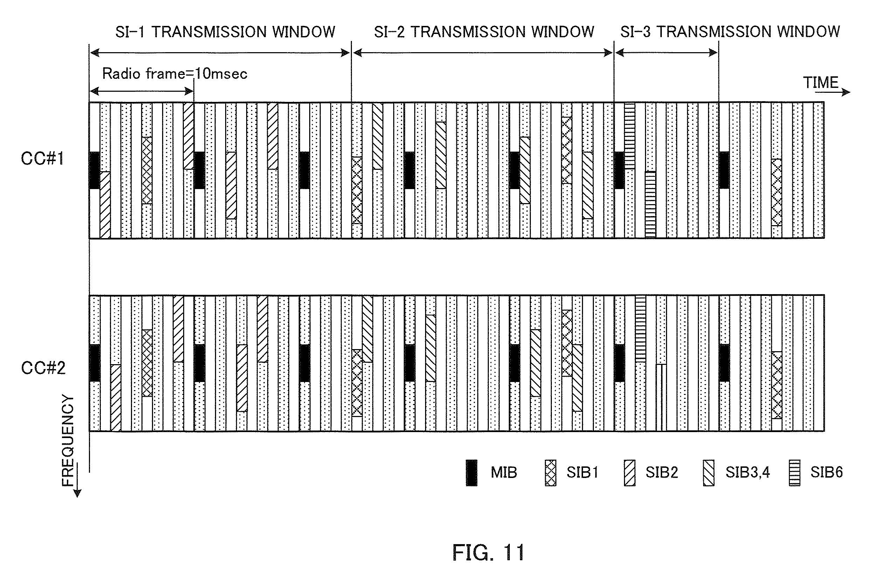

Here, referring to FIG. 11, a second receiving method by the mobile terminal apparatus 10 will be described in detail. FIG. 11 is a diagram for explaining the second receiving method by a mobile terminal apparatus 11 in detail. As shown in FIG. 11, in component carrier CC #1, the odd-numbered subframes are set as transmission windows, and, in component carrier CC #2, the even-numbered subframes are set as transmission windows. Consequently, the base station apparatus 20 notifies the mobile terminal apparatus 10 of system information (SIB 2 and onward) using component carrier CCs #1 and #2 alternately.

In this case, SIB 1 is fixed in time resources, and therefore the transmission timing cannot be changed. Consequently, in component carrier CCs #1 and #2, SIB 1 is assigned to the same transmission timing and the same resource block in radio resources. This SIB 1 includes scheduling information for component carrier CCs #1 and #2, and, by receiving SIB 1 in either component carrier CC #1 or #2, it is possible to receive system information in component carrier CCs #1 and #2. Note that this transmission window setting for LTE-A is notified from the base station apparatus 20 to the mobile terminal apparatus 10, but may be notified by, for example, SIBs and other broadcast information defined newly for the LTE-A system, or by control information.

Then, the mobile terminal apparatus 10 receives system information by switching component carriers per subframe. By means of this configuration, it is not necessary to make the modification period long in the LTE-A system where a plurality of component carriers constitute the system band. Also, the transmission window for LTE-A is newly set and notified to the mobile terminal apparatus 10 supporting the LTE-A system, and this does not affect the mobile terminal apparatus 10 supporting LTE system.

As described above, the base station apparatus 20 according to the present embodiment notifies change of system information in the system band using a plurality of component carriers, to mobile terminal apparatuses corresponding to respective component carriers, so that, even when a plurality of mobile communication systems coexist, it is possible to allow a mobile terminal apparatus to support each mobile communication system to recognize change of system information. Also, it is possible to allow a mobile terminal apparatus 10 that receives system information via a plurality of component carriers to recognize change of system information via part of the component carriers.

Note that, although the first notification method to the seventh notification method have been described with the above embodiments, the present invention is by no means limited to these notification methods. Any notification method may be used insofar as being a method to allow a mobile terminal apparatus to recognize change of system information via part of component carriers and receive system information.

Also, although the second receiving method in the above embodiments has been configured to set transmission windows by shifting the transmission windows in one-subframe units between a plurality of component carriers, this configuration is by no means limiting, and it is equally possible to shift and set transmission windows by a greater time interval than one subframe as one unit.

Also, although with the above embodiments the tag information of SIB 1 and paging channel flag have been described as change information, this configuration is by no means limiting. Change information may be configured in any as long as it can notify change of system information to a mobile terminal apparatus.

The present invention is by no means limited to the above embodiments and can be implemented in various modifications. For example, without departing from the spirit of the present invention, it is possible to change the assignment of component carriers, the number of processing parts, the steps of processing, the number of component carriers and the cardinal number of component carriers in the above description as appropriate. Other changes are also possible as appropriate without departing from the spirit of the present invention.

The disclosure of Japanese Patent Application No. 2010-006141, filed on January 14, 2010, including the specification, drawings, and abstract, is incorporated herein by reference in its entirety.

## Claims

1. A base station apparatus comprising:
a change information generation section configured to generate change information of system information in a system band formed with a plurality of component carriers; and
a notification section configured to notify the change information, using the plurality of component carriers, to a mobile terminal apparatus corresponding to each component carrier,
wherein the change information allows the mobile terminal apparatus to recognize change of system information in the system band via at least one component carrier, and allows the mobile terminal apparatus to receive the system information.

2. The base station apparatus according to claim 1, wherein the change information allows the mobile terminal apparatus to recognize the change of the system information in the system band as change of the system information in all of the component carriers, and allows the mobile terminal apparatus to receive the system information of all of the component carriers.

3. The base station apparatus according to claim 1, further comprising a group information generation section configured to generate group information for dividing the plurality of component carriers into groups and specifying component carriers belonging to each group, wherein:
the notification section notifies the group information to the mobile terminal apparatus and also notifies the change information to the mobile terminal apparatus using a component carrier where the system information is changed in the group; and
the change information allows the mobile terminal apparatus to recognize change of system information in one of the component carriers in the group as change of the system information in all of the component carriers in the group, and allows the mobile terminal apparatus to receive the system information of all of the component carriers in the group specified by the group information.

4. The base station apparatus according to claim 3, further comprising a notification carrier specifying information generation section configured to generate notification carrier specifying information for allowing the mobile terminal apparatus to specify a component carrier for notification of the change information in each group,
wherein the notification section notifies the notification carrier specifying information to the mobile terminal apparatus, and also notifies the change information to the mobile terminal apparatus using the component carrier for notification of the change information.

5. The base station apparatus according to claim 3, wherein the change information represents change of system information in a specific component carrier in the group, allows the mobile terminal apparatus to recognize the component carrier where the system information is changed in the group, and allows the mobile terminal apparatus to receive the system information of the component carrier.

6. The base station apparatus according to claim 5, further comprising a notification carrier specifying information generation section configured to generate notification carrier specifying information for allowing the mobile terminal apparatus to specify a component carrier for notification of the change information in each group,
wherein the notification section notifies the notification carrier specifying information to the mobile terminal apparatus, and also notifies the change information to the mobile terminal apparatus using the component carrier for notification of the change information.

7. The base station apparatus according to claim 1, wherein the change information represents change of system information in a specific component carrier in the system band, allows the mobile terminal apparatus to recognize the component carrier where the system information is changed in the system band, and allows the mobile terminal apparatus to receive the system information of the component carrier.

8. The base station apparatus according to claim 7, further comprising a notification carrier specifying information generation section configured to generate notification carrier specifying information for allowing the mobile terminal apparatus to specify a component carrier for notification of the change information in the system band,
wherein the notification section notifies the notification carrier specifying information to the mobile terminal apparatus and also notifies the change information to the mobile terminal apparatus using the component carrier for notification of the change information.

9. The base station apparatus according to any one of claims 1 to 8, further comprising a subframe specifying information generation section configured to, when the system information is changed in the plurality of component carriers in a same period and the plurality of carriers to use for notification of the system information are switched in subframe units, generate subframe specifying information to allow the mobile terminal apparatus to specify a received subframe among the plurality of component carriers,
wherein the notification section notifies the subframe specifying information to the mobile terminal apparatus.

10. A system information notification method comprising the steps of:
at a base station apparatus that notifies system information to a mobile terminal apparatus, generating change information of the system information in a system band formed with a plurality of component carriers; and
at the base station apparatus, notifying the change information, using the plurality of component carriers, to a mobile terminal apparatus corresponding to each component carrier; and
at the mobile terminal apparatus, recognizing change of system information in the system band via at least one component carrier by notification of the change information, and receiving the system information.
